# EUROPÄISCHE PATENTSCHRIFT

(11) **EP 3 172 121 B1**
(45) Veröffentlichungstag und Bekanntmachung des Hinweises auf die Patenterteilung: **11.07.2018**
(21) Anmeldenummer: 14727826.1
(22) Anmeldetag: 03.06.2014
(51) Int. Cl.: B62K 25/04

(54) **FAHRRADRAHMEN UND FAHRRAD**
BICYCLE FRAME AND BICYCLE
CADRE DE BICYCLETTE ET BICYCLETTE

(43) Veröffentlichungstag der Anmeldung: 31.05.2017
(73) Patentinhaber: BMC Switzerland AG, 2540 Grenchen (DE)
(72) Erfinder: STÄMPFLI, Peter, CH-3027 Biel (CH); CHRIST, Stefan, CH-2500 Biel (CH)
(74) Vertreter: Troesch Scheidegger Werner AG
(86) Internationale Anmeldenummer: PCT/EP2014/061489
(87) Internationale Veröffentlichungsnummer: WO 2015/185112

(56) Entgegenhaltungen:
- EP-A1- 2 740 659
- FR-A- 777 157
- GB-A- 718 299
- US-A- 5 098 114
- US-A- 5 570 896
- US-A1- 2008 203 700
- US-B1- 7 591 475
- US-B2- 7 168 726

## Beschreibung

Die vorliegende Erfindung betrifft einen Fahrradrahmen und ein Fahrrad gemäss den Ansprüchen 1 und 10.

Es sind Fahrräder, z.B. Mountainbikes, mit einem Fahrradrahmen-Aufbau bekannt, bei welchem die Vorderradgabel entlang ihrer Axialrichtung federnd geführt ist, um somit das Vorderrad federnd an einem vorderen Fahrradrahmenabschnitt zu lagern. Es ist ebenfalls bekannt, zusätzlich das Hinterrad federnd zu lagern, um somit Schwingungen des Hinterrades, hervorgerufen durch Unebenheiten des Fahrweges, weitestgehend zu dämpfen und zu absorbieren. Fahrräder mit einem vollständig federnd und gedämpft gelagerten Hinterrad bieten aufgrund des langen Federweges einen hohen Komfort. Es sind hierzu mehrere Ansätze bekannt, mittels welcher die Hinterradschwinge federnd am Fahrradrahmen angelenkt ist. Ein Fahrrad mit federnd gelagertem Vorderrad als auch Hinterrad, auch unter dem Begriff "Full-Suspension-Fahrrad" bekannt, bietet einen erhöhten Fahrkomfort und einen gesteigerten Einsatzbereich des Fahrrades, beispielsweise in einem unwegsamen Gelände. Es hat sich als nachteilig erwiesen, dass die hierzu vorgesehenen Federungssysteme aufgrund ihrer hohen Komplexität teuer sind und aufgrund ihrer starken Beanspruchung zudem sehr fehleranfällig sind. Ein weiterer Nachteil besteht in dem hohen Gewicht dieser Federungssysteme, welches den Bestrebungen zur Gewichtsreduktion von beispielsweise einem Mountainbike zuwider läuft.

Ein weiterer Nachteil voll gefederter Fahrräder besteht in der hohen Anzahl beweglicher Teile, welche häufig gewartet werden müssen. Hierdurch steigen die Wartungskosten des Fahrrades. Darüber hinaus haben diese Fahrräder eine im Vergleich zu ungefederten Fahrrädern, sogenannte "Hardtail-Fahrräder" geringere Verwindungssteifigkeit, wodurch die Kraftübertragung reduziert ist und die Fahreigenschaft verschlechtert ist.

Es sind ebenfalls Fahrräder bekannt, welche Federungssysteme zum Federn und Dämpfen von Schwingungen des Hinterrades umfassen, deren Federweg im Gegensatz zum Federweg bei den "Full-Suspension-Fahrrädern" reduziert ist. In diesem Zusammenhang wird von leicht gefederten Hardtail-Fahrrädern oder sogenannten Softtail-Fahrrädern gesprochen.

Diese leicht gefederten Fahrräder haben einen Grundaufbau, bei welchem die Sitzstreben über ein Dämpfungselement am Sitzrohr angelenkt sind. Weiterhin sind die Sitzstreben starr mit einem Ende von Kettenstreben verbunden, wobei die Kettenstreben an ihrem weiteren Ende starr mit dem Gehäuse des Kurbellagers verbunden sind.

Die US 7,168,726 B2 zeigt einen Fahrradrahmen, bei welchem ein zylindrischer Endabschnitt der Sitzstreben in eine korrespondierend geformte zylindrische Aufnahme aufgenommen ist, welche am Sitzrohr angebracht ist. In diese Aufnahme ist ein Dämpfungselement, beispielsweise ein elastischer Körper, eingesetzt. Durch diese Anordnung sind die Sitzstreben entlang ihrer Axialrichtung beweglich. Stösse auf die Sitzstreben werden durch das Dämpfungselement gedämpft an das Sitzrohr übertragen.

Die US 7,591,475 B1 zeigt eine dem vorgenannten Prinzip entsprechende Federsystemanordnung, bei welcher ebenfalls ein zylindrischer Abschnitt der Sitzstreben axial durch eine korrespondierend geformte zylindrische Aufnahme geführt wird. Diese Aufnahme hält im Inneren ein Dämpfungselement, gegen welches ein proximaler Endabschnitt der Sitzstreben abschnittsweise gedämpft anschlagen kann. Die EP 1 985 531 A1 zeigt einen Fahrradrahmen, bei welchem ein zylindrischer Abschnitt der Sitzstreben in eine korrespondierend geformte zylindrische Aufnahme eingeführt ist. Zwischen dem Sitzstreben-Endabschnitt und dem Sitzrohr ist eine Federungsanordnung eingefügt, welche ein zylindrisches Elastomer und dieses umgebende Hülsen umfasst. Entlang der Mittenachse dieser Anordnung ist ein Schraubenschaft durchführbar, welcher an seinem distalen Ende über eine Schraubverbindung mit dem Sitzrohr fest verbunden ist. Der Schraubenkopf des Schraubenschafts dient am gegenüberliegenden Ende dieser Befestigung als ein Anschlag. Die Dokumente FR777157 A und GB718299 A offenbaren jeweils einen Fahrradrahmen mit den Merkmalen des Oberbegriffs von Anspruch 1. Fahrradrahmen aus dem Stand der Technik umfassen somit einen Dämpfungsaufbau, bei welchem ein zylinderförmiger Endabschnitt der Sitzstreben in einer korrespondierend geformten zylindrischen Aufnahme aufgenommen ist. Hierdurch ist eine in Radialrichtung der gemeinsamen Mittenachse von diesen zylindrischen Abschnitten (Endabschnitt der Sitzstreben und zylindrische Aufnahme) formschlüssige Verbindung geschaffen und nur eine Bewegung entlang der Mittenachse der zylindrischen Abschnitte ermöglicht bzw. freigegeben. Stösse auf das Hinterrad werden über die Sitzstreben in Richtung dieser Mittenachse an ein zwischengesetztes elastisches Element weitergeleitet und somit gedämpft an das Sitzrohr übertragen.

Ein Nachteil im Stand der Technik liegt darin, dass dem Fahrradrahmen durch den zuvor genannten Aufbau insgesamt eine geringe Verwindungssteifigkeit verliehen wird. Beim Einwirken insbesondere von Querkräften auf das Hinterrad, verdreht sich die Hinterradaufhängung in Relation zum Fahrradrahmen. Mit anderen Worten, kann die Drehachse beim Fahren des Fahrrades leicht taumeln, insbesondere bei Geländefahrten, Kurvenfahrten, usw., welches sich negativ auf die Fahreigenschaften auswirkt. Auch ist die Kraftübertragung von den Pedalen an das Hinterrad reduziert.

Es ist Aufgabe der vorliegenden Erfindung, einen Fahrradrahmen und ein Fahrrad bereitzustellen, bei welchen die Nachteile aus dem Stand der Technik gelöst sind. Insbesondere sollen ein Fahrradrahmen und ein Fahrrad geschaffen werden, bei welchen die Fahreigenschaft und die Kraftübertragung an das Hinterrad verbessert sind.

Erfindungsgemäss umfasst ein Fahrradrahmen mit einem Sitzrohr und Sitzstreben ferner einen zwischen dem Sitzrohr und den Sitzstreben angeordneten Rahmendämpfer mit einem Dämpfungselement, wobei der Rahmendämpfer zum elastischen Anlenken der Sitzstreben am Sitzrohr ausgebildet ist, wobei der Rahmendämpfer die Sitzstreben und das Sitzrohr drehstarr verbindet. Hierdurch sind die am Sitzrohr angelenkten Sitzstreben drehstarr mit dem Sitzrohr verbunden, wobei gleichzeitig die Sitzstreben durch das zwischengefügte Dämpfungselement federnd und gedämpft am Sitzrohr angelenkt sind. Somit werden auf eine überraschend einfache Weise zuverlässig Torsionskräfte der Sitzstreben durch das Sitzrohr und somit den gesamten Fahrradrahmen aufgenommen. Trotz bewegbar gedämpfter Anlenkung zwischen Sitzstreben und Sitzrohr weist der Fahrradrahmen eine hervorragende Verwindungssteifigkeit auf. Erfindungsgemäß umfasst der Rahmendämpfer eine Führungsanordnung mit wenigstens zwei Führungen, welche die Sitzstreben und das Sitzrohr miteinander verbinden, wobei die Führungen voneinander parallel beabstandet erstreckt sind. Hierdurch besitzt der Fahrradrahmen bisher unbekannte vorteilhafte Eigenschaften hinsichtlich einer hervorragenden Hinterraddämpfung ohne Einschränkungen der Verwindungssteifigkeit des gesamten Fahrradrahmens. Erfindungsdgemäß umfasst jede der Führungen eine Anordnung aus einem Vorsprung und einer korrespondierenden Aufnahme, wobei der Vorsprung und die Aufnahme am jeweils anderen von dem Sitzrohr und den Sitzstreben angeordnet sind. Die jeweiligen Vorsprünge greifen in die zugeordneten Aufnahmen ein, welche deren Axialbewegung führen.

Vorzugsweise sind die Vorsprünge und die Aufnahmen jeweils derart ausgerichtet, dass deren Mittenachsen parallel zu einer Ebene verlaufen, welche flächenparallel zu einer durch die Sitzstreben aufgespannten Ebene verläuft. Diese Anordnung erlaubt eine zuverlässige Einleitung der an die Sitzstreben angelegten Kräfte in den Rahmendämpfer.

Beispielsweise sind die paarweisen Vorsprünge und Aufnahmen derart ausgerichtet, dass deren Mittenachsen in einer Ebene verlaufen, welche gleich der durch die Sitzstreben aufgespannten Ebene ist. Hierdurch werden die durch das Hinterrad an die Sitzstreben angelegten Kräfte ohne einen Versatz direkt entlang der Mittenachsen an das Sitzrohr übertragen. Durch diese versatzfreie Kraftübertragung werden keinerlei Biegemomente hervorgerufen, welche zu hohen Materialbeanspruchungen und möglicherweise zu einem Materialbruch führen könnten.

Vorzugsweise sind die Vorsprünge entnehmbar an den Sitzstreben anbringbar und sind die Aufnahmen am Sitzrohr angebracht. Somit sind die Sitzstreben und das Sitzrohr zuverlässig axial geführt aneinander angelenkt.

Vorzugsweise sind die Vorsprünge als zylinderförmige Stifte ausgebildet und sind die Aufnahmen als zylinderförmige Aufnahmen ausgebildet. Der Aussendurchmesser der Stifte entspricht im Wesentlichen dem Innendurchmesser der zylinderförmigen Aufnahmen. Durch diese Anordnung werden Radialkräfte formschlüssig aufgenommen. Eine Verschiebung in Relation zueinander in Axialrichtung ist freigegeben. Hierdurch ist eine zuverlässige und kostgünstige Führung geschaffen, welche in Radialrichtung formschlüssig ist und lediglich eine Bewegung in Axialrichtung zulässt. Durch die Anordnung von wenigstens zwei dieser Führungen parallel zueinander beabstandet, werden zudem vorteilhafterweise auch Torsionskräfte zuverlässig aufgenommen. Mit anderen Worten, wird ein Drehmoment der Sitzstreben an das Sitzrohr und somit den Fahrradrahmen übertragen und aufgenommen. Die zylinderförmigen Stifte sind beispielsweise jeweils an den Sitzstreben angebracht, beispielsweise mittels Verschraubung, während die zylinderförmigen Aufnahmen fest am Sitzrohr angeordnet sind.

Vorzugsweise umfasst das Dämpfungselement wenigstens zwei Durchführungen, ausgebildet zur Durchführung der Vorsprünge. Somit kann auf ein grossflächiges Dämpfungselement zurückgegriffen werden, wodurch die Dämpfungswirkung erhöht wird. Zum Durchführen der jeweiligen Vorsprünge durch die Durchführungen im Dämpfungselement sind diese an korrespondierenden Positionen eingebracht. Aufgrund der in Axialrichtung frei bewegbaren Lagerung der Vorsprünge innerhalb der am Sitzrohr angebrachten Aufnahmen werden die an die Sitzstreben angelegten Kräfte lediglich über das Material des Dämpfungselements an das Sitzrohr und somit an den Fahrradrahmen übertragen. Hierdurch wird eine hervorragende Dämpfungseigenschaft gewährleistet. Ein weiterer Vorteil der in das Material des Dämpfungselements eingetragenen Durchführungen besteht darin, dass das Dämpfungselement somit zugleich mittels der durchlaufenden Vorsprünge zuverlässig an Ort und Stelle gehalten wird.

Vorzugsweise umfasst das Dämpfungselement ein Elastomermaterial. Hierdurch ist ein kostengünstiges Material zum Dämpfen der Stösse bereitgestellt, welches zudem leicht ist, eine lange Lebensdauer hat und einen ausreichend gradlinigen Kraft-Wege-Verlauf aufweist. Es können unterschiedlich stark verformbare Elastomermaterialien bereitgestellt werden, welche bei gleichen Krafteinwirkungen unterschiedlich stark nachgeben. Somit können dem Fahrradrahmen (und insgesamt dem Fahrrad) durch Wahl eines geeigneten Elastomermaterials individuell zugewiesene Dämpfungseigenschaften verliehen werden. Ausserdem können in Abhängigkeit von beabsichtigten Benutzungen des Fahrrads (beispielsweise im Wesentlichen ruhige Fahrten auf gerader Strecke bis zu rasanten Bergabfahrten im Gelände) jeweils geeignete Dämpfungselemente eingebaut werden. Zudem können in Abhängigkeit von der Nutzlast (Gewicht des Fahrradfahrers, Zuladung, usw.) vorbestimmte geeignete Dämpfungselemente gewählt werden, um somit stets optimale Fahreigenschaften zu erfahren. Erfindungsgemäß umfasst der Rahmendämpfer ferner entnehmbare Laufbuchsen, welche in den Aufnahmen einbringbar sind. Somit können beispielsweise die Stifte spielfrei innerhalb der Laufbuchsen geführt werden. Die Laufbuchsen können Abschnitte der Aufnahmen verkleiden, sodass die Stifte jeweils innerhalb dieser Laufbuchsen zuverlässig axial geführt werden. Insbesondere der Innenumfang der Laufbuchsen ist durch geeignete Verarbeitung (beispielsweise besonderes Härten) besonders abriebfest ausgebildet. Der Aussendurchmesser der Stifte entspricht dem Innendurchmesser der Laufbuchsen, wobei nur sehr geringe Fehlertoleranzen zugelassen sind, um hierdurch eine spielfreie Axiallagerung der Stifte zu gewährleisten. Die Laufbuchsen sind entnehmbar in den jeweiligen Aufnahmen eingesetzt, sodass sie im Falle von Abnutzung oder allgemeinem Verschleiss schnell und einfach gegen neue Laufbuchsen ausgetauscht werden können. Durch die Bereitstellung der Laufbuchsen in die Aufnahmen braucht das Material, in welches die Aufnahmen eingetragen sind, nicht den besonders hohen Anforderungen in Bezug auf Härte, Abnutzungswiderstand, niedrige Toleranzen, usw. genügen, sodass insgesamt Kosten eingespart werden und der Wartungsaufwand reduziert wird.

Vorzugsweise umfasst der Rahmendämpfer einen am Sitzrohr angebrachten Gehäuseabschnitt, welcher zur im Wesentlichen bündigen Aufnahme des Dämpfungselements ausgebildet ist. Beispielsweise sind die Aufnahmen in einem Flansch eingetragen, welcher fest mit dem Sitzrohr verbunden ist. Beispielsweise ist der Flansch einstückig mit dem Sitzrohr verbunden. Der Flansch umfasst einen in Richtung zu den Sitzstreben geöffneten Gehäuseabschnitt, in welchem das Dämpfungselement eingeführt ist. Hierbei entsprechen die Innenkonturen des Gehäuseabschnitts im Wesentlichen den Aussenkonturen des Dämpfungselements. Aufgrund der Elastizität des Dämpfungselements kann dieses durch leichtes Pressen zuverlässig in den Gehäuseabschnitt eingeführt werden und verbleibt zuverlässig an Ort und Stelle. Durch diesen Presssitz wird zugleich eine zuverlässige und wirksame Abdichtung gegen Schmutz und Wasser ermöglicht.

Vorzugsweise ist der Gehäuseabschnitt zur im Wesentlichen bündigen Aufnahme von einem Verbindungsabschnitt der Sitzstreben ausgebildet. Beispielsweise hat der Verbindungsabschnitt, an welchem die Sitzstreben zusammenlaufen, eine Aussenkontur, welche im Wesentlichen der Innenkontur des Gehäuseabschnitts entspricht. Somit kann dieser Frontseiten-Abschnitt der Sitzstreben abschnittsweise und im Wesentlichen spielfrei in den geöffneten Gehäuseabschnitt eingeführt werden, wodurch eine axial bewegbare Verbindung ermöglicht wird. Hierdurch ist ein zur Aussenseite abgeschlossener Rahmendämpfer bereitgestellt, in welchen weder Schmutz noch Wasser eindringen können. Zudem ist mittels der zuvor genannten Verbindung eine zuverlässige Übertragung von Torsionskräften zwischen den Sitzstreben und dem Sitzrohr ermöglicht.

Die zuvor genannte Aufgabe wird zudem durch ein Fahrrad mit einem Fahrradrahmen nach einem der Ansprüche 1 bis 9 gelöst. Es ist hierdurch ein Fahrrad geschaffen, bei welchem Stösse auf das Hinterrad von den Sitzstreben gedämpft an das Sitzrohr übertragen werden. Zudem werden Torsionskräfte, welche bei der Fahrt an die Sitzstreben angelegt werden, insbesondere hervorgerufen durch Querkräfte an das Hinterrad, durch den Rahmendämpfer aufgenommen und direkt an das Sitzrohr und somit den Fahrradrahmen überführt. Somit hat das Fahrrad ein gefedertes Hinterrad und zudem eine sehr hohe Verwindungssteifigkeit. Hierdurch besitzt das Fahrrad sehr gute Fahreigenschaften.

Ausführungsbeispiele der vorliegenden Erfindung werden nachstehend anhand von Figuren noch näher erläutert. Es zeigen:
- Figur 1: eine schematische Ansicht eines Fahrrads gemäss der Erfindung; und
- Figur 2: einen Abschnitt eines Fahrradrahmens in einer Vergrösserungsansicht des in Figur 1 gezeigten Fahrrads mit einem Rahmendämpfer.

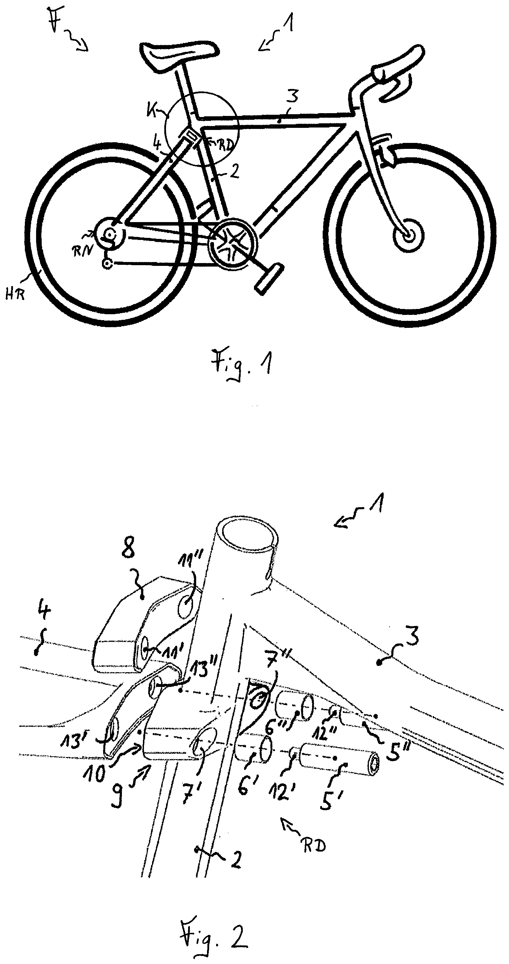

Figur 1 zeigt ein Fahrrad F in einer schematischen Ansicht. Das Fahrrad F umfasst einen Fahrradrahmen 1, welcher wiederum ein Sitzrohr 2 und ein hieran angebrachtes Oberrohr 3 umfasst. Ferner umfasst sind Sitzstreben 4, deren distalen Enden eine Radnabe RN eines Hinterrades HR des Fahrrads F lagern. Die Sitzstreben 4 sind über einen Rahmendämpfer RD am Sitzrohr 2 bewegbar und gedämpft angelenkt. Der Rahmendämpfer RD und der diesen umgebende Abschnitt des Fahrradrahmens 1 sind in einem Kreis K eingeschrieben.

In Figur 2 ist der in Figur 1 durch einen Kreis K eingeschriebene Abschnitt des Fahrradrahmens 1 in einer Vergrösserungsansicht gezeigt. In dieser Ansicht sind der Rahmendämpfer RD und der umgebende Abschnitt des Fahrradrahmens 1 in einer Explosionsdarstellung schematisch dargestellt.

Der Rahmendämpfer RD umfasst eine paarweise Anordnung aus Stiften 5', 5", Laufbuchsen 6', 6", und Aufnahmen 7', 7". Ferner umfasst ist ein Dämpfungselement 8 aus einem elastischen Material.

Das Sitzrohr 2 ist mit einem Flansch 9 bereitgestellt, welcher in der in Figur 2 gezeigten Ausführungsform einstückig mit dem Sitzrohr 2 ausgebildet ist. Der Flansch 9 ist derart ausgebildet, dass seine Längsrichtung im Wesentlichen senkrecht zum Verlauf des Sitzrohrs 2 erstreckt ist. Hierdurch sind links und rechts vom Sitzrohr 2 zwei Aussenflügel geschaffen. In diesen Aussenflügeln sind beidseitig jeweils die Aufnahmen 7', 7", beispielsweise durch Bohren, eingetragen. Der Durchmesser dieser Bohrungen ist derart gewählt, dass er gleich dem Aussendurchmesser der Laufbuchsen 6', 6" entspricht, welche in den Aufnahmen 7', 7" aufgenommen sind. Der Flansch 9 ist an einem Abschnitt mit einem in Richtung zu den Sitzstreben 4 geöffneten Gehäuseabschnitt 10 bereitgestellt. Der Gehäuseabschnitt 10 erstreckt sich ausreichend zur Frontseite um hierin das Dämpfungselement 8 aufzunehmen. Hierzu umfasst der Gehäuseabschnitt 10 eine Innenkontur, welche der Aussenkontur des Dämpfungselements 8 entspricht. Somit kann das Dämpfungselement 8 fest und zuverlässig im Gehäuseabschnitt 10 des Flansches 9 aufgenommen werden.

Die Stifte 5', 5" werden von der den Sitzstreben 4 abgewandten Seite aus in die Aufnahmen 7', 7" bzw. in die Laufbuchsen 6', 6" eingeschoben und durchlaufen ferner durch jeweils in das Dämpfungselement 8 eingetragene Durchführungen 11', 11". Die Stifte 5', 5" sind jeweils mit Aussengewindeabschnitten 12', 12" versehen. Der die Sitzstreben 4 verbindende Abschnitt ist an jeweils korrespondierenden Positionen mit Innengewindeabschnitten 13', 13" versehen. Die durch die Aufnahmen 7', 7" und das Dämpfungselement 8 durchgeführten Stifte 5', 5" werden mittels ihrer Aussengewindeabschnitte 12', 12" einfach mit den Innengewindeabschnitten 13', 13" verschraubt.

Insgesamt wird eine zuverlässige Formschlussverbindung (in Radialrichtung der Mittenachse der Stifte 5', 5") mit den Aufnahmen 7', 7" hergestellt, wobei die Sitzstreben 4 und das Sitzrohr 2 entlang der Erstreckung der Stifte 5', 5" in Relation zueinander linear bewegbar sind. Zur einfachen und zuverlässigen Verschraubung der Stifte 5', 5" mit den Sitzstreben 4 sind die den Aussengewindeabschnitten 12', 12" entgegengesetzten Enden der Stifte 5', 5" mit einem Innensechskantprofil versehen, sodass die Stifte 5', 5" schnell und einfach mittels eines Aussensechskant-Werkzeugs (Inbusschlüssel) verschraubt werden können.

Die Kräfte, welche in die Sitzstreben 4 in Richtung zum Rahmendämpfer RD eingeleitet sind, werden somit durch das Dämpfungselement 8 gedämpft an das Sitzrohr 2 übertragen. Durch die Kraft werden die Stifte 5', 5" in Richtung der Krafteinwirkung bewegt. Die Länge der Stifte 5', 5" in Relation zur Länge der Aufnahmen 7', 7" ist derart gewählt, dass die Enden der Stifte 5', 5" ein stückweit aus den Aufnahmen 7', 7" vorragen können. Hierdurch kann eine Führung bei maximaler Axialerstreckung sichergestellt werden.

Durch die paarweise Bereitstellung der Stift-Aufnahme-Anordnung wird vorteilhafterweise sichergestellt, dass die an die Sitzstreben 4 angelegten Torsionskräfte ebenso zuverlässig an das Sitzrohr 2 übertragen werden. Zusätzlich, durch die abschnittsweise Ineingriffnahme des Vorderabschnitts der Sitzstreben 4 durch den Gehäuseabschnitt 10, wobei die jeweiligen Konturen einander entsprechen, werden die Torsionskräfte weiter zuverlässig an das Sitzrohr 2 übertragen. Somit besitzt der Fahrradrahmen 1 eine sehr hohe Verwindungssteifigkeit bei gleichzeitig zuverlässiger Dämpfung von Stössen auf das Hinterrad HR.

Die Kombination dieser positiven Eigenschaften, welche im Stand der Technik gänzlich unbekannt ist, verleiht diesem Fahrrad F (siehe Figur 1) sehr gute Fahreigenschaften. Zudem ist der Rahmendämpfer RD kostengünstig in der Herstellung und ist durch die geringe Anzahl von Bauteilen schnell und einfach zusammensetzbar. Ausserdem hat der Rahmendämpfer RD ein sehr geringes Gewicht, welches wiederum für gute Fahreigenschaften des Fahrrads sorgt.

Bei dem Fahrradrahmen 1 kann vorteilhafterweise ein Drehpunkt im Hinterbau (nicht gezeigt) eingespart werden. Die nötige Verformung geschieht über flexible Ketten und durch die Sitzstreben 4 selber. Ein weiterer Vorteil des Rahmendämpfers RD ist in seinem sehr geringen Wartungsaufwand zu finden. Ein noch weiterer Vorteil besteht darin, dass die gewünschte Dämpfungseigenschaft durch geeignete Wahl der Elastizität des entsprechenden Dämpfungselements 8 individuell bestimmbar ist.

## Patentansprüche

1. Fahrradrahmen (1) mit einem Sitzrohr (2) und Sitzstreben (4), ferner umfassend einen zwischen dem Sitzrohr (2) und den Sitzstreben (4) angeordneten Rahmendämpfer (RD) mit einem Dämpfungselement (8), wobei der Rahmendämpfer (RD) zum elastischen Anlenken der Sitzstreben (4) am Sitzrohr (2) ausgebildet ist und eine Führungsanordnung mit wenigstens zwei Führungen umfasst, welche die Sitzstreben (4) und das Sitzrohr (2) miteinander verbinden, wobei die Führungen voneinander parallel beabstandet erstreckt sind und jeweils eine Anordnung aus einem Vorsprung (5', 5") und einer korrespondierenden Aufnahme (7', 7") umfassen, wobei der Vorsprung (5', 5") und die Aufnahme (7', 7") am jeweils anderen von dem Sitzrohr (2) und den Sitzstreben (4) angeordnet sind, wobei der Rahmendämpfer (RD) die Sitzstreben (4) und das Sitzrohr (2) drehstarr verbindet, **dadurch gekennzeichnet, dass** der Rahmendämpfer (RD) ferner entnehmbare Laufbuchsen (6', 6") umfasst, welche in die Aufnahmen (7', 7") einbringbar sind.

2. Fahrradrahmen (1) nach Anspruch 1, bei welchem die Vorsprünge (5', 5") und die Aufnahmen (7', 7") jeweils derart ausgerichtet sind, dass deren Mittenachsen parallel zu einer Ebene verlaufen, welche flächenparallel zu einer durch die Sitzstreben (4) aufgespannten Ebene verläuft.

3. Fahrradrahmen (1) nach Anspruch 1 oder 2, bei welchem die Vorsprünge (5', 5") entnehmbar an den Sitzstreben (4) anbringbar sind und die Aufnahmen (7', 7") am Sitzrohr (2) angebracht sind.

4. Fahrradrahmen (1) nach einem der vorherigen Ansprüche, bei welchem die Vorsprünge (5', 5") als zylinderförmige Stifte ausgebildet sind und die Aufnahmen (7', 7") als zylinderförmige Aufnahmen ausgebildet sind.

5. Fahrradrahmen (1) nach einem der vorherigen Ansprüche, bei welchem das Dämpfungselement (8) wenigstens zwei Durchführungen (11', 11") umfasst, ausgebildet zur Durchführung der Vorsprünge (5', 5").

6. Fahrradrahmen (1) nach einem der vorherigen Ansprüche, bei welchem das Dämpfungselement (8) ein Elastomermaterial umfasst.

7. Fahrradrahmen (1) nach Anspruch 1, bei welchem der Innenumfang der Laufbuchsen (6', 6") gehärtet ist.

8. Fahrradrahmen (1) nach einem der vorherigen Ansprüche, bei welchem der Rahmendämpfer (RD) einen am Sitzrohr (2) angebrachten Gehäuseabschnitt (10) umfasst, welcher zur im Wesentlichen bündigen Aufnahme des Dämpfungselements (8) ausgebildet ist.

9. Fahrradrahmen (1) nach Anspruch 8, bei welchem der Gehäuseabschnitt (10) zur im Wesentlichen bündigen Aufnahme von einem Verbindungsabschnitt der Sitzstreben (4) ausgebildet ist.

10. Fahrrad (F) mit einem Fahrradrahmen (1) nach einem der Ansprüche 1 bis 9.

## Claims

1. A bicycle frame (1) comprising a seat tube (2) and seat struts (4), further comprising a frame damper (RD) having a damping element (8) arranged between the seat tube (2) and the seat struts (4), wherein the frame damper (RD) is configured to elastically couple the seat struts (4) to the seat tube (2) and comprises a guide assembly having at least two guides for coupling the seat struts (4) and the seat tube (2) to each other, wherein the guides being spaced apart from each other in parallel and comprise an arrangement including a projection (5',5") and a corresponding receptacle (7',7"), respectively, wherein the projection (5',5") and the receptacle (7',7") are provided to the other one of the seat tube (2) and the seat struts (4), respectively, wherein the frame damper (RD) connects the seat struts (4) and the seat tube (2) in a torsionally rigid manner, **characterized in that**
the frame damper (RD) further comprises removable bushings (6',6") which are insertable into the receptacles (7',7").

2. The bicycle frame (1) according to claim 1, wherein the projections (5',5") and the receptacles (7',7") are each aligned such that the center axes thereof extend parallel to a plane which extends plane parallel to a plane spanned by the seat struts (4).

3. The bicycle frame (1) according to claim 1 or 2, wherein the projections (5',5") are removably attached to the seat struts (4), and wherein the receptacles (7',7") are mounted to the seat tube (2).

4. The bicycle frame (1) according to one of the preceding claims, wherein the projections (5',5") are formed as cylindrical pins, and wherein the receptacles (7',7") are formed as cylindrical receptacles.

5. The bicycle frame (1) according to one of the preceding claims, wherein the damping element (8) comprises at least two passages (11',11") adapted to allow passage of the projections (5',5").

6. The bicycle frame (1) according to one of the preceding claims, wherein the damping element (8) comprises an elastomer.

7. The bicycle frame (1) according to claim 1, wherein the inner race of the bushings (6',6") is hardened.

8. The bicycle frame (1) according to one of the preceding claims, wherein the frame damper (RD) comprises a housing section (10) attached to the seat tube (2), configured to receive the damping element (8) substantially flush.

9. The bicycle frame (1) according to claim 8, wherein the housing portion (10) is configured to be received by a connecting portion of the seat struts (4) substantially flush.

10. A bicycle (F) comprising a bicycle frame (1) according to one of claims 1 to 9.

## Revendications

1. Cadre de vélo (1) pourvu d'un tube de selle (2) et de haubans (4), comprenant en outre un amortisseur de cadre (RD) agencé entre le tube de selle (2) et les haubans (4) et pourvu d'un élément d'amortissement (8), l'amortisseur de cadre (RD) étant conçu pour articuler élastiquement les haubans (4) au niveau du tube de selle (2) et comprenant un système de guidage avec au moins deux guidages qui relient entre eux les haubans (4) et le tube de selle (2), les guidages étant étendus parallèlement et à distance l'un de l'autre et comprenant un système composé d'une saillie (5', 5") et d'un logement correspondant (7', 7"), la saillie (5', 5") et le logement (7', 7") étant agencés respectivement sur le tube de selle (2) et sur les haubans (4), l'amortisseur de cadre (RD) reliant les haubans (4) et le tube de selle (2) de façon immobile en rotation, caractérisé en que l'amortisseur de cadre (RD) comprend en outre des chemises de cylindres (6', 6") amovibles qui peuvent être introduites dans les logements (7, 7").

2. Cadre de vélo (1) selon la revendication 1, dans lequel les saillies (5', 5") et les logements (7', 7") sont orientés de telle manière que leurs axes médians s'étendent parallèlement à un plan, qui s'étend parallèlement à un plan défini par les haubans (4).

3. Cadre de vélo (1) selon la revendication 1 ou 2, dans lequel les saillies (5', 5") peuvent être raccordées de façon détachable aux haubans (4) et dans lequel les logements (7', 7") sont montés sur le tube de selle (2).

4. Cadre de vélo (1) selon l'une des revendications précédentes, dans lequel les saillies (5', 5") sont réalisées sous la forme de broches cylindriques et en ce que les logements (7', 7") sont réalisés sous la forme de logements cylindriques.

5. Cadre de vélo (1) selon l'une des revendications précédentes, dans lequel l'élément d'amortissement (8) comprend au moins deux passages (11', 11"), conçus pour faire passer les saillies (5', 5").

6. Cadre de vélo (1) selon l'une des revendications précédentes, dans lequel l'élément d'amortissement (8) comprend un matériau en élastomère.

7. Cadre de vélo (1) selon la revendication 1, dans lequel le pourtour intérieur des chemises de cylindre (6', 6") est trempé.

8. Cadre de vélo (1) selon l'une des revendications précédentes, dans lequel l'amortisseur de cadre (RD) comprend une section de boîtier (10) montée sur le tube de selle (2), laquelle section est conçue pour recevoir de façon essentiellement affleurante l'élément d'amortissement (8).

9. Cadre de vélo (1) selon la revendication 8, dans lequel la section de boîtier (10) est conçue pour recevoir de façon essentiellement affleurante une section de raccordement des haubans (4).

10. Vélo (F) comprenant un cadre de vélo (1) selon l'une des revendications 1 à 9.
